# EUROPEAN PATENT SPECIFICATION

(11) **EP 2 671 468 B1**
(45) Date of publication and mention of the grant of the patent: **28.02.2018**
(21) Application number: 12170948.9
(22) Date of filing: 06.06.2012
(51) Int. Cl.: A47B 13/06, A47B 47/00, F16B 12/44

(54) **Supporting frame**
Stützrahmen
Cadre de support

(43) Date of publication of application: 11.12.2013
(73) Proprietor: Shiang Ye Industrial Co., Ltd., Kaohsiung City, 831, Taiwan (TW)
(72) Inventor: HUANG, Tsung Chieh, Kaohsiung City (TW)
(74) Representative: Treeby, Philip David William

(56) References cited:
- DE-A1- 1 554 238
- DE-A1- 3 208 576
- DE-U1- 8 910 311
- DE-U1-202004 001 941

## Description

### FIELD OF THE INVENTION

The present invention relates to supporting frames which are used for desks, chairs, receiving boxes, storage tanks, kitchen cabinets, etc. with a simple structure which can be assembled easily and conveniently,

### BACKGROUND OF THE INVENTION

Generally, the frames of desks and chairs, supporting frames, receiving frames, kitchen cabinets are based on the environments locating the frames so that these furniture are made as an integral merchandize. However, recently, under new concepts, the frames are designed as assembled and foldable elements for selling and transportation. This is because the conventional structure has a large volume and thus they are not suitable for transportation. Furthermore, if parts of these frames are destroyed, these improved designs are helpful in updating. Furthermore, the foldable structure is suitable for stacking a plurality of basic units with a small volume.

However, the inventors have referred to many kinds of the conventional and newly designs, but the inventor discovers that these designs still have the defects of occupying large volumes, high cost, and large stacking volumes and the inventor discovers that these defects are improvable.

DE 3208576 discloses a pipe connection, consisting of at least one pipe part and a coupling part, having at least one plug-in peg which can be inserted into the pipe part and has at least one threaded hole, which passes through and runs transversely with respect to the longitudinal axis of the said plug-in peg, for a threaded pin whose front and rear ends in each case have allocated to them a hole in the pipe part which is aligned thereto, at least the hole allocated to the peak of the threaded pin having a smaller diameter than the threaded pin, in such a manner that the latter can penetrate into the edge of the hole in a positively-locking manner.

### SUMMARY OF THE PRESENT INVENTION

Accordingly, the primary object of the present invention is to provide a supporting frame, wherein the assembly work of the supporting frame can be performed by users; the elements of the present invention can be updated and maintained easily; the frames are assembled by basic units so that the cost can be downed and the stock required is low; all the elements can be detached and assembled easily and quickly so that the work for transportation is simplified; the structure of the present invention is concrete.

To achieve above object, the present invention provides a supporting frame which comprises four transversal supporting tubes, each of the transversal supporting tubes having two hollow ends; each two adjacent inner faces of each transversal supporting tube being formed with a screw hole; four longitudinal supporting tubes, each upper end of the longitudinal supporting tubes being a hollow end; moreover, each two adjacent inner faces of each longitudinal supporting tube being formed with respective screw hole; and a plurality of three-way internal connecting units; each three-way internal connecting unit having three inserting ends; each inserting end of the three-way internal connecting unit can be inserted into the hollow ends of the transversal supporting tube and the longitudinal supporting tube; thus by the longitudinal supporting tubes, the four transversal supporting tubes can be assembled as a rectangular upper frame and the four longitudinal supporting tubes being assembled as legs of the upper frame, wherein each three-way internal connecting unit is formed by three rectangular ends; each end having a hollow inner space; each two inner faces of the rectangular ends of the three-way internal connecting unit being formed with three holes; a plurality of enhancing fixing units; each enhancing fixing unit is formed by two connected lower rectangular sheets which is connected with an angle of 90 degrees therebetween; each upper end of the lower rectangular sheet is extended with an upper rectangular sheet; each of the lower rectangular sheets and upper rectangular sheets has a respective screw hole two parallel sides of each lower rectangular sheets are formed with protruding rims; wherein in assembling, two inner sides of the lower rectangular sheets will adhere to inner faces of each longitudinal supporting tube and upper surfaces of the upper rectangular sheets adhere to lower surfaces of respective transversal supporting tubes; then screws are used to lock the enhancing fixing unit to the respective longitudinal supporting tube and respective transversal supporting tubes by the screw to pass through the screw holes of the longitudinal supporting tube, the transversal supporting tubes and the three-way internal connecting unit.

### BRIEF DESCRIPTION OF THE DRAWINGS

Fig. 1 shows the embodiment of the present invention.
Fig. 2 is an exploded perspective view of the present invention.
Fig. 3 is an assembled view of the present invention.
Fig. 4 is another assembled view of the present invention.
Fig. 5 is a perspective view showing the enhancing fixing unit of the present invention.
Fig. 6 is an elevational view of the enhancing fixing unit shown in Fig. 5.
Fig. 7 is a right side view of the enhancing fixing unit shown in Fig. 5.
Fig. 8 is a left side view of the enhancing fixing unit shown in Fig. 5.
Fig. 9 is an upper view of the enhancing fixing unit shown in Fig. 5.
Fig. 10 is a perspective view of the three-way internal connecting unit of the present invention.
Fig. 11 is a right side view of the three-way internal connecting unit shown in Fig. 10.
Fig. 12 is a left side view of the three-way internal connecting unit shown in Fig. 10.
Fig. 13 is a lower side view of the three-way internal connecting unit shown in Fig. 10.

### DETAILED DESCRIPTION OF THE IVENTION

In order that those skilled in the art can further understand the present invention, a description of preferred embodiments is provided. However, these descriptions and the appended drawings are only used to cause those skilled in the art to understand the objects, features, and characteristics of the present invention, but not to be used to confine the scope of the present invention defined in the appended claims.

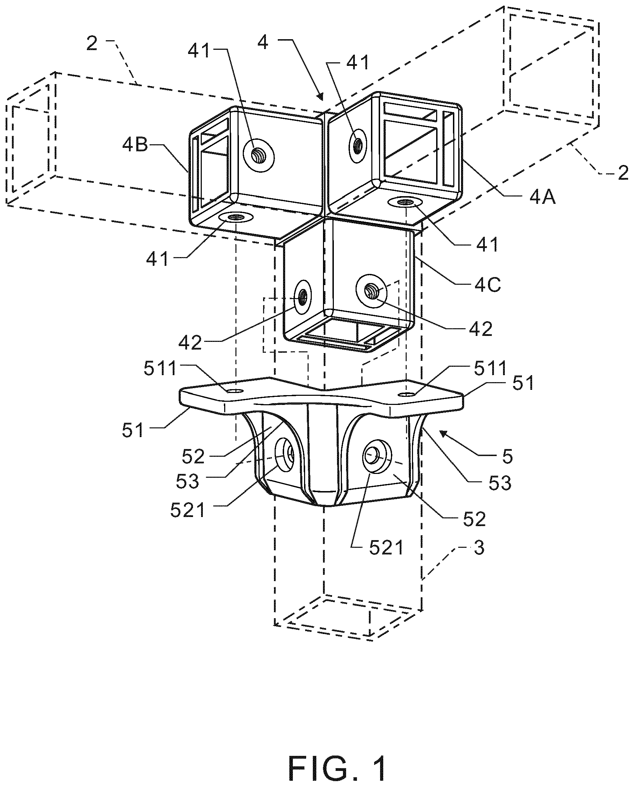

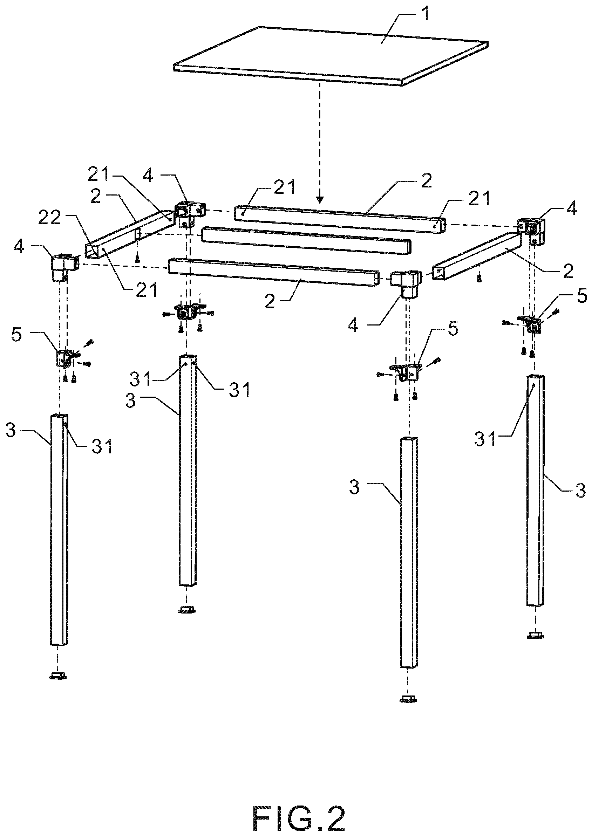

With reference to Fig. 1, the frame structure of the present invention is illustrated. The feature of the present invention is that a three ways internal connecting elements and enhancing fixtures of the present invention can be widely used as table frames, chair frames, receiving frames, kitchen cabinets, etc. Referring to Figs. 2 to 4, the structure of the present invention will be described with reference to the drawings. In the following, a desk is used for description, but it is not used to confine the scope of the present invention.

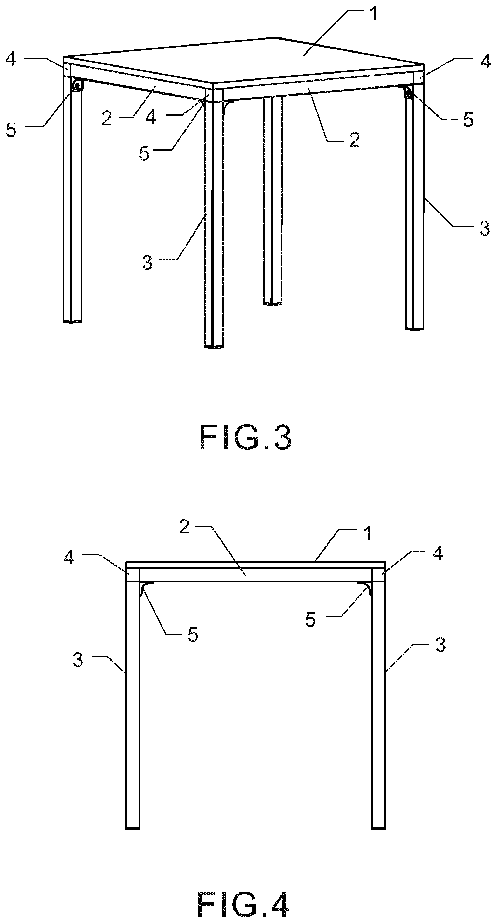

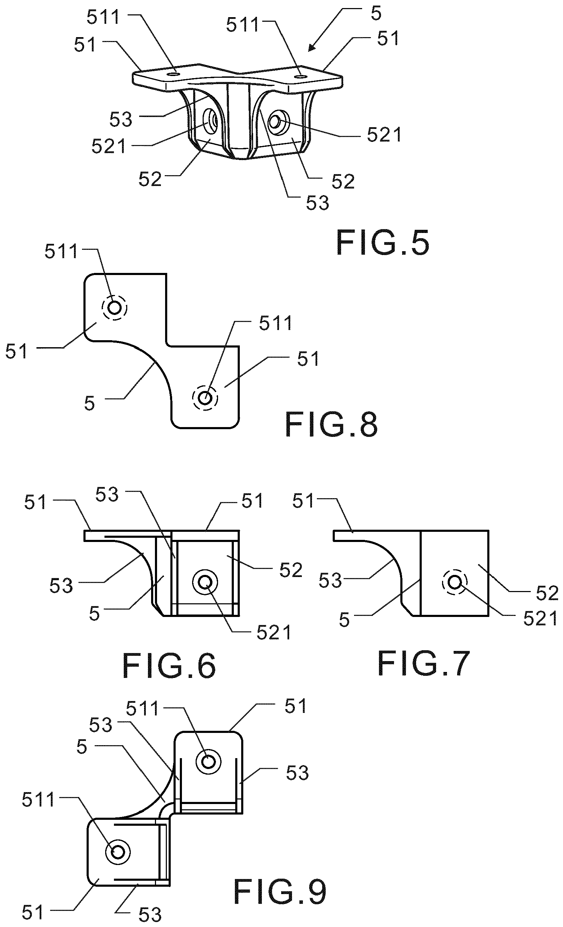

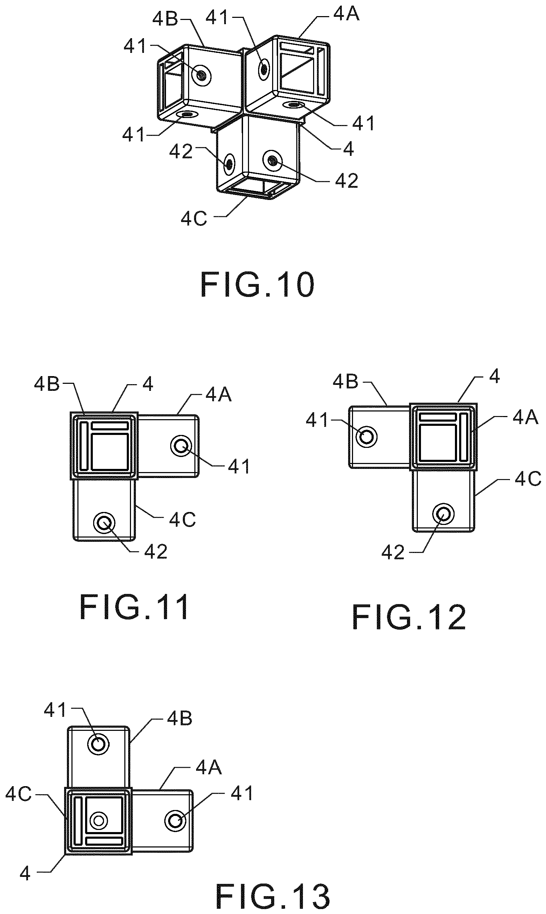

With reference to Fig. 1, the present invention includes the following elements of:
four transversal supporting tubes 2, each of the transversal supporting tubes 2 having two hollow ends; moreover, each two adjacent inner faces of each transversal supporting tube 2 being formed with respective screw holes 21, 22;
four longitudinal supporting tubes 3, each upper end of the longitudinal supporting tubes 3 being a hollow end; moreover, each two adjacent inner faces of each longitudinal supporting tube 3 being formed with respective screw hole 31, 32;
a plurality of three-way internal connecting units 4; each three-way internal connecting unit 4 having three inserting ends; each inserting end of the three-way internal connecting unit 4 can be inserted into the hollow ends of the transversal supporting tube 2 and the longitudinal supporting tube 3; every two ends of the longitudinal supporting tube 3 being formed with an angle of 90 degrees; thus by the longitudinal supporting tubes 3, the four transversal supporting tubes 2 can be assembled as a rectangular upper frame and the four longitudinal supporting tubes 3 being assembled as legs of the upper frame as illustrated in Fig. 3; Figs. 3 and 4 showing the assembly view of the present invention;
referring to Fig. 2, a middle section of one inner side of the transversal supporting tube 2 can be formed with a receiving hole for receiving an enhancing bar;
referring to Figs. 10, 11, 12 and 13, the structure of the three-way internal connecting unit 4 being illustrated; each three-way internal connecting unit 4 being formed by three rectangular ends 4A, 4B and 4C; each end having a hollow inner space; each two inner faces of the rectangular ends of the three-way internal connecting unit 4 being formed with three holes 41, 42;
a plurality of enhancing fixing units 5; referring to Figs. 5 to 9, each enhancing fixing unit 5, as illustrated in Fig. 5, being by two connected lower rectangular sheets 52 which is connected with an angle of 90 degrees therebetween; each upper end of the lower rectangular sheet 52 being extended with an upper rectangular sheet 51. Each of the lower rectangular sheets 52 and upper rectangular sheets 51 has a respective screw hole 521, 511. Two parallel sides of each lower rectangular sheets 52 are formed with protruding rims 53; wherein in assembling, two inner sides of the lower rectangular sheets 52 will adhere to inner faces of each longitudinal supporting tube 3 and upper surfaces of the upper rectangular sheets 51 adhere to lower surfaces of respective transversal supporting tubes 2. Then as illustrated in Fig. 2, screws are used to lock the enhancing fixing unit 5 to the respective longitudinal supporting tube 3 and respective transversal supporting tubes 2 by the screw to pass through the screw holes of the longitudinal supporting tube 3, transversal supporting tubes 2 and three-way internal connecting unit 4.

Advantage of the present invention will be described herein. The assembly work can be performed by users; the elements of the present invention can be updated and maintained easily; the frames are assembled by basic units so that the cost can be downed and the stock required is low; all the elements can be detached and assembled easily and quickly so that the work for transportation is simplified; and moreover, the structure of the present invention is concrete.

The present invention is thus described, it will be obvious that the same may be varied in many ways, without departing from the appended claims. For example, the slot 11, 12 can be formed directly to the pillar; the pushing head 46 of the tightening unit 4 can be formed like a saddle capable of sitting across the water blocking sheet for better stability.

## Claims

1. A supporting frame, comprising:
four transversal supporting tubes (2), each of the transversal supporting tubes (2) having two hollow ends; each two adjacent inner faces of each transversal supporting tube (2) being formed with a screw hole (21);
four longitudinal supporting tubes (3), each upper end of the longitudinal supporting tubes (3) being a hollow end; moreover, each two adjacent inner faces of each longitudinal supporting tube (3) being formed with respective screw hole (31, 32); and
a plurality of three-way internal connecting units (4); each three-way internal connecting unit (4) having three inserting ends; each inserting end of the three-way internal connecting unit (4) can be inserted into the hollow ends of the transversal supporting tube (2) and the longitudinal supporting tube (3); thus by the longitudinal supporting tubes (3), the four transversal supporting tubes (2) can be assembled as a rectangular upper frame and the four longitudinal supporting tubes (3) being assembled as legs of the upper frame, **characterized in that**.
each three-way internal connecting unit (4) is formed by three rectangular ends 4A, 4B and 4C; each end having a hollow inner space; each two inner faces of the rectangular ends of the three-way internal connecting unit (4) being formed with three holes (41, 42); a plurality of enhancing fixing units (5); each enhancing fixing unit (5) is formed by two connected lower rectangular sheets (52) which is connected with an angle of 90 degrees therebetween; each upper end of the lower rectangular sheet (52) is extended with an upper rectangular sheet (51); each of the lower rectangular sheets (52) and upper rectangular sheets (51) has a respective screw hole (521, 511); two parallel sides of each lower rectangular sheets (52) are formed with protruding rims (53); wherein in assembling, two inner sides of the lower rectangular sheets (52) will adhere to inner faces of each longitudinal supporting tube (3) and upper surfaces of the upper rectangular sheets (51) adhere to lower surfaces of respective transversal supporting tubes (2); then screws are used to lock the enhancing fixing unit (5) to the respective longitudinal supporting tube (3) and respective transversal supporting tubes (2) by the screw to pass through the screw holes of the longitudinal supporting tube (3), the transversal supporting tubes (2) and the three-way internal connecting unit (4).

2. The supporting frame as claimed in claim 1, wherein every two ends of the longitudinal supporting tube (3) is formed with an angle of 90 degrees.

3. The supporting frame as claimed in claim 1, wherein a middle section of one inner side of the transversal supporting tube (2) is formed with a receiving hole for receiving an enhancing bar.

## Patentansprüche

1. Tragrahmen, der Folgendes umfasst:
vier querlaufende Tragrohre (2), wobei die querlaufenden Tragrohre (2) jeweils zwei hohle Enden aufweisen, wobei zwei benachbarte innenliegende Seitenflächen jedes querlaufenden Tragrohrs (2) jeweils mit einem Schraubenloch (21) gebildet sind;
vier längslaufende Tragrohre (3), wobei es sich bei den oberen Enden der längslaufenden Tragrohre (3) jeweils um ein hohles Ende handelt; wobei darüber hinaus zwei benachbarte innenliegende Seitenflächen jedes längslaufenden Tragrohrs (3) jeweils mit einem jeweiligen Schraubenloch (31, 32) gebildet sind; und
eine Vielzahl von internen Dreiwege-Verbindungseinheiten (4); wobei die internen Dreiwege-Verbindungseinheiten (4) jeweils drei Einsteckenden aufweisen, wobei die Einsteckenden der internen Dreiwege-Einsteckeinheit (4) jeweils in die hohlen Enden des querlaufenden Tragrohrs (2) und des längslaufenden Tragrohrs (3) eingesteckt werden können; wobei somit die vier querlaufenden Tragrohre (2) mittels der längslaufenden Tragrohre (3) als rechteckiger oberer Rahmen zusammengesetzt werden können und die vier längslaufenden Tragrohre (3) als Beine des oberen Rahmens zusammengesetzt werden, **dadurch gekennzeichnet, dass**
die internen Dreiwege-Verbindungseinheiten (4) jeweils von drei rechteckigen Enden 4A, 4B und 4C gebildet werden; jedes Ende einen hohlen Innenraum aufweist; zwei innenliegende Seitenflächen der rechteckigen Enden der internen Dreiwege-Verbindungseinheit (4) jeweils mit drei Löchern (41, 42) gebildet sind; eine Vielzahl von versteifenden Fixierungseinheiten (5); wobei die versteifenden Fixierungseinheiten (5) jeweils von zwei miteinander verbundenen unteren rechteckigen Platten (52) gebildet werden, die mit einem Winkel von 90 Grad dazwischen verbunden sind; wobei die oberen Enden der unteren rechteckigen Platte (52) jeweils durch eine obere rechteckige Platte (51) verlängert sind; wobei die unteren rechteckigen Platten (52) und die oberen rechteckigen Platten (51) jeweils ein jeweiliges Schraubenloch (521, 511) aufweisen; wobei zwei parallele Seiten jeder unteren rechteckigen Platte (52) mit vorstehenden Rändern (53) gebildet sind; wobei beim Zusammensetzen zwei innenliegende Seiten der unteren rechteckigen Platten (52) an inneren Seitenflächen jedes längslaufenden Tragrohrs (3) haften und obere Oberflächen der oberen rechteckigen Platten (51) an unteren Oberflächen jeweiliger querlaufender Tragrohre (2) haften; dann Schrauben verwendet werden, um die versteifende Fixierungseinheit (5) an dem jeweiligen längslaufenden Tragrohr (3) und den jeweiligen querlaufenden Tragrohren (2) zu sichern, indem die Schraube durch die Schraubenlöcher des längslaufenden Tragrohrs (3), der querlaufenden Tragrohre (2) und der internen Dreiwege-Verbindungseinheit (4) verlaufen.

2. Tragrahmen nach Anspruch 1, wobei beide Enden des längslaufenden Tragrohrs (3) jeweils mit einem Winkel von 90 Grad gebildet sind.

3. Tragrahmen nach Anspruch 1, wobei ein mittlerer Abschnitt einer innenliegenden Seite des querlaufenden Tragrohrs (2) mit einem Aufnahmeloch zum Aufnehmen eines Versteifungsstabs gebildet ist.

## Revendications

1. Cadre de support, comportant :
quatre tubes de support transversaux (2), chacun des tubes de support transversaux (2) ayant deux extrémités creuses ; chaque ensemble de deux faces intérieures adjacentes de chaque tube de support transversal (2) étant formé avec un trou de vis (21) ;
quatre tubes de support longitudinaux (3), chaque extrémité supérieure des tubes de support longitudinaux (3) étant une extrémité creuse ; de plus, chaque ensemble de deux faces intérieures adjacentes de chaque tube de support longitudinal (3) étant formé avec un trou de vis respectif (31, 32) ; et
une pluralité d'unités de connexion internes à trois voies (4) ; chaque unité de connexion interne à trois voies (4) ayant trois extrémités d'insertion ; chaque extrémité d'insertion de l'unité de connexion interne à trois voies (4) peut être insérée dans les extrémités creuses du tube de support transversal (2) et du tube de support longitudinal (3) ; ainsi, par les tubes de support longitudinaux (3), les quatre tubes de support transversaux (2) peuvent être assemblés sous la forme d'un cadre supérieur rectangulaire et les quatre tubes de support longitudinaux (3) étant assemblés sous la forme de pieds du cadre supérieur, **caractérisé en ce que** :
chaque unité de connexion interne à trois voies (4) est formée par trois extrémités rectangulaires 4A, 4B et 4C ; chaque extrémité ayant un espace intérieur creux ; chaque ensemble de deux faces intérieures des extrémités rectangulaires de l'unité de connexion interne à trois voies (4) étant formé avec trois trous (41, 42) ; une pluralité d'unités de fixation à embellissement (5) ; chaque unité de fixation à embellissement (5) est formée par deux feuilles rectangulaires inférieures connectées (52) qui sont connectées avec un angle de 90 degrés entre les deux ; chaque extrémité supérieure de la feuille rectangulaire inférieure (52) est étendue avec une feuille rectangulaire supérieure (51) ; chacune des feuilles rectangulaires inférieures (52) et des feuilles rectangulaires supérieures (51) a un trou de vis respectif (521, 511) ; deux côtés parallèles de chaque feuille rectangulaire inférieure (52) sont formés avec des bords faisant saillie (53) ; dans lequel, lors de l'assemblage, deux côtés intérieurs des feuilles rectangulaires inférieures (52) adhéreront à des faces intérieures de chaque tube de support longitudinal (3) et les surfaces supérieures des feuilles rectangulaires supérieures (51) adhéreront aux surfaces inférieures des tubes de support transversaux respectifs (2) ; puis des vis sont utilisées pour bloquer l'unité de fixation à embellissement (5) au tube de support longitudinal respectif (3) et aux tubes de support transversaux respectifs (2) par la vis passant au travers des trous de vis du tube de support longitudinal (3), des tubes de support transversaux (2) et de l'unité de connexion interne à trois voies (4).

2. Cadre de support selon la revendication 1, dans lequel chaque ensemble de deux extrémités du tube de support longitudinal (3) est formé avec un angle de 90 degrés.

3. Cadre de support selon la revendication 1, dans lequel une section intermédiaire d'un côté intérieur du tube de support transversal (2) est formée avec un trou de réception à des fins de réception d'une barre à embellissement.
